# EUROPÄISCHE PATENTSCHRIFT

(11) **EP 3 906 133 B1**
(45) Veröffentlichungstag und Bekanntmachung des Hinweises auf die Patenterteilung: **20.04.2022**
(21) Anmeldenummer: 19800973.0
(22) Anmeldetag: 05.11.2019
(51) Int. Cl.: B23K 20/10, H01R 43/02, B23K 101/38

(54) **ULTRASCHALLSCHWEISSEINRICHTUNG MIT POSITIONIERUNGSERKENNUNG VON FÜGEPARTNERN**
ULTRASONIC WELDING DEVICE WITH POSITION DETECTION OF JOINT PARTNERS
DISPOSITIF DE SOUDAGE PAR ULTRASONS AVEC DÉTECTION DE POSITION DE PIÈCES DE JONCTION

(43) Veröffentlichungstag der Anmeldung: 10.11.2021
(73) Patentinhaber: Schunk Sonosystems GmbH, 35435 Wettenberg (DE)
(72) Erfinder: GASSERT, Frank, 35649 Bischoffen (DE); MÜLLER, Stefan, 35580 Wetzlar (DE); WAGENBACH, Rainer, 35799 Merenberg (DE); WERNER, Waldemar, 35447 Reiskirchen (DE); GÜNTHER, Daniel, 35428 Langgöns (DE); KOSECKI, Dariusz, 35444 Biebertal (DE); BECKER, Stephan, 35037 Marburg (DE); KOCH, Eugen, 35305 Grünberg (DE)
(74) Vertreter: Qip Patentanwälte Dr. Kuehn & Partner mbB
(86) Internationale Anmeldenummer: PCT/EP2019/080248
(87) Internationale Veröffentlichungsnummer: WO 2021/089124

(56) Entgegenhaltungen:
- EP-A1- 1 516 689
- DE-A1-102017 006 239
- DE-B3-102017 114 182

## Beschreibung

### GEBIET DER ERFINDUNG

Die vorliegende Erfindung betrifft eine Ultraschallschweißeinrichtung.

### HINTERGRUND DER ERFINDUNG

DE 10 2017 114182 B3 offenbart eine gattungsgemäße Ultraschallschweißeinrichtung.

Für verschiedenste technische Anwendungen kann es notwendig sein, zwei Komponenten mechanisch fest und/oder elektrisch leitfähig miteinander zu verbinden. Beispielsweise kann es für verschiedene Einsatzzwecke erforderlich sein, Kabel bzw. deren Litzen mechanisch und elektrisch leitfähig miteinander zu verbinden. Hierdurch können beispielsweise Kabelstränge oder Kabelbäume gefertigt werden, mithilfe derer elektrische Verbraucher zum Beispiel innerhalb eines Fahrzeugs miteinander, mit einer Energiequelle und/oder mit einer Steuerung elektrisch verbunden werden können.

Um zwei elektrisch leitfähige Komponenten stoffschlüssig und somit mechanisch belastbar und elektrisch gut leitfähig miteinander zu verbinden, wurde das sogenannte Ultraschallschweißen entwickelt. Es ist eine spezielle Ausprägung des Reibschweißens, bei dem zu verschweißende Komponenten, die auch als Fügepartner oder Schweißgut bezeichnet werden, mit Oberflächen aneinander in Anlage gebracht und unter geringem Druck und hochfrequenten mechanischen Schwingungen gegeneinander bewegt werden. Die Schwingungen können hierbei mithilfe einer Sonotrode erzeugt werden, in der Ultraschallschwingungen mit Frequenzen von typischerweise 20 kHz bis 50 kHz erzeugt und auf wenigstens einen der Fügepartner übertragen werden. Durch plastisches Fließen können sich die Fügepartner dann oberflächennah ineinander verzahnen oder verhaken, ohne dass die Materialien der Fügepartner notwendigerweise schmelzen. Durch Ultraschallschweißen können Fügepartner daher schonend, schnell und wirtschaftlich miteinander verbunden werden.

Ultraschallschweißen kann insbesondere auch zum Verschweißen von metallischen Fügepartnern wie zum Beispiel Litzen von zwei oder mehreren zu verbindenden Kabeln oder wie zum Beispiel zwei oder mehr Einzeldrähten einer verschweißend zu verdichtenden Litze eines Kabels eingesetzt werden. Hierzu werden die Fügepartner im Allgemeinen in einen Aufnahmeraum einer Ultraschallschweißeinrichtung eingelegt und anschließend zwischen einer Ultraschall-schwingenden Sonotrode und einem Amboss miteinander verschweißt.

Beim Ultraschallschweißen kann die Relativpositionierung der Fügepartner zu einander während eines Ultraschallschweißvorgangs einen erheblichen Einfluss auf eine Qualität der erzeugten Verschweißung haben. Insbesondere sollten Enden eines, zweier oder mehrerer als Fügepartner zu verschweißender Litzen in dem Aufnahmeraum der Ultraschallschweißeinrichtung möglichst genau übereinander positioniert sein, sodass sie in etwa fluchtend miteinander zwischen der Sonotrode und dem Amboss aufgenommen werden und miteinander verschweißt werden können.

Herkömmlich musste oft ein Bediener einer Ultraschallschweißeinrichtung darauf achten, zu verschweißende Kabel mit ihren Litzen korrekt innerhalb des Aufnahmeraums der Ultraschallschweißeinrichtung zu positionieren. Hierzu konnten innerhalb des Aufnahmeraums Markierungen vorgesehen sein, an denen die Enden der Litzen ausgerichtet werden sollten.

Um Kabel miteinander in Form eines sogenannten Endknotens zu verschweißen, d.h. wenn beide Kabel aus einer selben Richtung kommend in den Aufnahmeraum der Ultraschallschweißeinrichtung einzulegen waren, war es auch bekannt, ein Anschlagelement in Form eines sogenannten Litzenendanschlages manuell an eine Montageplatte anzuschrauben und diese Montageplatte dann an geeigneter Position in der Ultraschallschweißeinrichtung zu montieren. Die Litzen der Kabel konnten dann in dem Aufnahmeraum an dem Anschlagelement stirnseitig anliegend positioniert werden. Allerdings mussten solche Anschlagelemente aufwendig montiert und bei Nichtverwendung wieder demontiert werden.

### ZUSAMMENFASSUNG DER ERFINDUNG UND VORTEILHAFTER AUSFÜHRUNGSFORMEN

Es kann ein Bedarf an einer Ultraschallschweißeinrichtung zum Verschweißen zweier oder mehrerer Fügepartner bestehen, welche einfach zu bedienen ist, welche eine hohe und vorzugsweise über viele Schweißvorgänge gleichbleibende Qualität von erzeugten Schweißverbindungen ermöglicht und/oder welche in einfacher Weise für verschiedene Einsatzzwecke, insbesondere zur Erzeugung verschiedenartiger Schweißknoten, konfigurierbar ist.

Einem solchen Bedarf kann mit dem Gegenstand des unabhängigen Anspruchs entsprochen werden. Vorteilhafte Ausführungsformen sind in den abhängigen Ansprüchen sowie der nachfolgenden Beschreibung definiert.

Gemäß einem Aspekt der vorliegenden Erfindung wird eine Ultraschallschweißeinrichtung beschrieben, welche mit einer Funktionalität zum Erkennen einer gewünschten Positionierung von zu schweißenden Fügepartnern innerhalb der Ultraschallschweißeinrichtung ausgestattet ist. Die Ultraschallschweißeinrichtung weist als Komponenten zumindest eine Sonotrode, einen Amboss, ein Touchierelement, einen Seitenschieber, einen Aufhahmeraum, in welchem Fügepartner aufzunehmen sind und der von Komponenten der Ultraschallschweißeinrichtung umrandend begrenzt ist, sowie ein Anschlagelement auf. Das Anschlagelement wird hierin als erstes Anschlagelement bezeichnet, da, wie weiter unten ausgeführt, optional zumindest ein weiteres Anschlagelement vorgesehen sein kann. Der Aufnahmeraum wird an einer ersten Seite von einer Oberfläche der Sonotrode und an einer der ersten Seite gegenüberliegenden zweiten Seite von einer Oberfläche des Ambosses begrenzt. Der Aufnahmeraum wird ferner an einer dritten Seite von einer Oberfläche des Touchierelements und an einer der dritten Seite gegenüberliegenden vierten Seite von einer Oberfläche des Seitenschiebers begrenzt. Der Aufhahmeraum wird zumindest in einer von dem ersten Anschlagelement einnehmbaren Positionierungskonstellation ferner an einer fünften, quer zu den ersten bis vierten Seiten verlaufenden Seite von einer zu dem Aufnahmeraum gerichteten Oberfläche des ersten Anschlagelements begrenzt. Das erste Anschlagelement ist an seiner zu dem Aufnahmeraum gerichteten Oberfläche elektrisch leitfähig ausgebildet, um eine erste Elektrode zu bilden. Zumindest eine der den Aufhahmeraum umrandend begrenzenden Komponenten einschließend die Sonotrode, den Amboss, das Touchierelement und den Seitenschieber ist an ihrer jeweils zu dem Aufnahmeraum gerichteten Oberfläche elektrisch leitfähig ausgebildet, um eine zweite Elektrode zu bilden. Die Ultraschallschweißeinrichtung ist dazu konfiguriert, einen elektrischen Schluss zwischen der ersten Elektrode und der zweiten Elektrode zu detektieren und darauf basierend die gewünschte Positionierung zumindest eines zu schweißenden Fügepartners zu erkennen.

Ohne den Umfang der Erfindung in irgendeiner Weise zu beschränken, können Ideen und mögliche Merkmale zu Ausführungsformen der Erfindung unter anderem als auf den nachfolgend beschriebenen Gedanken und Erkenntnissen beruhend angesehen werden.

Im Aufnahmeraum der Ultraschallschweißeinrichtung sollen vor und während des Schweißvorgangs die zu verschweißenden Fügepartner aufgenommen werden. Der Aufhahmeraum ist dabei typischerweise zumindest von vier Seiten her begrenzt, sodass die Fügepartner lediglich in einem begrenzten Aufnahmevolumen Platz finden. An zwei gegenüberliegenden Seiten, d.h. beispielsweise oben und unten, kann der Aufhahmeraum einerseits von einer Oberfläche der Sonotrode und andererseits von einer Oberfläche des Ambosses begrenzt sein. Die Sonotrode und/oder der Amboss können dabei verlagerbar sein, sodass diese beiden Komponenten relativ zueinander aufeinander zu bzw. voneinander wegbewegt werden können und auf diese Weise der Aufnahmeraum in einer ersten Richtung, d.h. beispielsweise in senkrechter Richtung, verkleinert bzw. vergrößert werden kann. An zwei weiteren gegenüberliegenden Seiten, welche quer, vorzugsweise senkrecht, zu den zuvor genannten beiden Seiten verlaufen, d.h. beispielsweise links und rechts, kann der Aufnahmeraum einerseits von einer Oberfläche des Touchierelements und andererseits von einer Oberfläche des Seitenschiebers begrenzt werden. Das Touchierelement und/oder der Seitenschieber können dabei wiederum verlagerbar sein, sodass diese beiden Komponenten relativ zueinander aufeinander zu bzw. voneinander wegbewegt werden können und auf diese Weise der Aufnahmeraum in einer zu der oben genannten ersten Richtung senkrecht verlaufenden zweiten Richtung verkleinert bzw. vergrößert werden kann. Die Oberflächen der genannten Komponenten können den Aufnahmeraum dabei wie ein Rahmen, insbesondere ein viereckiger Rahmen, umgeben. An der nicht von den genannten Komponenten begrenzten fünften oder sechsten Seite können die Fügepartner in den rahmenartig umgebenen Aufnahmeraum eingebracht bzw. eingeschoben werden.

Die Formulierung "den Aufnahmeraum an einer Seite begrenzen" kann dabei dahingehend verstanden werden, dass die jeweilige Oberfläche der jeweils genannten Komponente dazu führt, dass sich die Fügepartner nicht über die von dieser Oberfläche bewirkte Begrenzung hinausbewegen können. Hierzu kann die jeweilige Oberfläche den Aufnahmeraum an der jeweiligen Seite komplett abdecken. Alternativ kann jedoch auch eine lediglich teilweise Abdeckung des Aufnahmeraums an der jeweiligen Seite genügen, solange sichergestellt bleibt, dass die Fügepartner innerhalb des Aufnahmeraums gehalten werden.

Die sich jeweils gegenüberliegenden beiden Komponenten, d.h. die Sonotrode und der Amboss bzw. das Touchierelement und der Seitenschieber, können vorzugsweise derart relativ zueinander bewegt werden, insbesondere aufeinander zu bewegt werden, um ein Volumen des Aufnahmeraums temporär verkleinern zu können und um insbesondere die darin aufgenommenen Fügepartner in Anlage miteinander pressen zu können.

Indem den Fügepartnern lediglich ein relativ kleinerer Aufnahmeraum zur Verfügung gestellt wird, der quer zu einer Richtung, in der die meist länglichen Fügepartner in den Aufnahmeraum eingeschoben bzw. eingelegt werden, rahmenartig von den vier genannten Komponenten umgeben ist, kann erreicht werden, dass die Fügepartner bereits zumindest mit einer grob vorgegebenen Positionierung relativ zueinander in dem Aufnahmeraum angeordnet werden können bzw. müssen, bevor der eigentliche Schweißvorgang beginnt, d.h. bevor die Fügepartner zwischen der Sonotrode und dem Amboss zusammengepresst werden. Beispielsweise kann erreicht werden, dass Litzen zweier als Fügepartner dienender und an ihren Enden abisolierter Kabel in dem Aufnahmeraum derart angeordnet sind, dass sie beim Zusammenführen der Sonotrode und des Ambosses eng in Anlage miteinander gepresst werden.

Wenn die Ultraschallschweißeinrichtung derart konfiguriert ist, dass die Sonotrode und der Amboss das Aufhahmevolumen von oben und unten begrenzen, bedeutet dies, dass die beiden Kabelenden vorteilhafterweise vertikal übereinander angeordnet sind. Eine solche Anordnung wirkt sich typischerweise positiv auf ein Schweißergebnis aus, wohingegen nebeneinander angeordnete Litzen oft nur unzureichend verschweißt würden.

Die hier beschriebene Ultraschallschweißeinrichtung soll außerdem über ein erstes Anschlagelement verfügen, mithilfe dessen auch eine fünfte Seite des Aufnahmeraums begrenzt werden kann. Diese fünfte Seite verläuft quer, vorzugsweise senkrecht, zu den anderen oben beschriebenen vier Seiten, welche rahmenartig von sonstigen Komponenten begrenzt werden. Das erste Anschlagelement kann somit einen Durchgang durch den rahmenartig begrenzten Aufnahmeraum, wie er sich ansonsten zwischen der fünften und der gegenüberliegenden sechsten Seite ergeben würde, an der fünften Seite verschließen.

Dementsprechend können ein oder mehrere Fügepartner zwar an der sechsten Seite in den Aufnahmeraum eingebracht werden, aber den Aufnahmeraum an der fünften Seite nicht mehr verlassen bzw. über den Aufnahmeraum an der fünften Seite hinausragen. Stattdessen können längliche Fügepartner lediglich mit ihrer Stirnseite bis an eine zu dem Aufnahmeraum gerichtete Oberfläche des Anschlagelements reichen und mit dieser in Anlage kommen.

Somit können ein oder mehrere zu verschweißende Fügepartner jeweils in den Aufnahmeraum eingebracht werden und mit ihrer Stirnseite bis zu dem Anschlagelement geschoben werden, sodass ihre stirnseitigen Enden an dem Anschlagelement anstoßend ausgerichtet sind bzw. sodass, im Falle mehrerer Fügepartner, ihre stirnseitigen Enden miteinander fluchtend übereinander und/oder nebeneinander positioniert sind. Das Einbringen der Fügepartner kann durch einen die Ultraschallschweißeinrichtung bedienenden Nutzer oder durch eine andere Maschine erfolgen.

Das Vorsehen des Anschlagelements an der fünften Seite des Aufnahmeraums ermöglicht ein sehr einfaches Einbringen der Fügepartner in den Aufnahmeraum in einer relativ zueinander ausgerichteten Konfiguration. Beispielsweise kann eine Person Kabel von der sechsten Seite her kommend in den Aufnahmeraum einschieben, bis sie spürt, dass die Kabel an dem gegenüberliegend angeordneten Anschlagelement anstoßen. Prinzipiell kann ein Bediener der Ultraschallschweißeinrichtung somit haptisch erkennen, das heißt spüren, ob ein Kabel korrekt in den Aufnahmeraum eingelegt wurde. Eine visuelle Kontrolle der Positionierung der Kabel braucht demnach im Allgemeinen nicht erfolgen.

Allerdings wurde beim praktischen Einsatz von Ultraschallschweißeinrichtungen wiederholt beobachtet, dass Bediener der Ultraschallschweißeinrichtung beispielsweise aufgrund einer Ablenkung oder mangelnder Konzentration Fügepartner nicht in einer gewünschten Positionierung innerhalb des Aufnahmeraums der Ultraschallschweißeinrichtung anordneten, bevor ein Schweißvorgang initiiert wurde. Dementsprechend konnten die Fügepartner in zumindest manchen Fällen mit unzureichender Qualität verschweißt werden, was beispielsweise zu Variationen bei der erreichten elektrischen Leitfähigkeit durch den erzeugten Schweißknoten und/oder bei einer mechanischen Festigkeit des Schweißknotens führen konnte.

Es wurde daher nach einer Möglichkeit gesucht, den Bediener durch eine in der Ultraschallschweißeinrichtung implementierte zusätzliche Funktionalität beim korrekten Positionieren der zu verschweißenden Fügepartner zu unterstützen.

Um dies zu ermöglichen, wird vorgeschlagen, eine zu dem Aufnahmeraum gerichtete Oberfläche des ersten Anschlagelements als erste Elektrode elektrisch leitfähig auszugestalten und eine zu dem Aufhahmeraum gerichtete Oberfläche wenigstens einer der den Aufnahmeraum seitlich umrandenden Komponenten als zweite elektrische Elektrode ebenfalls elektrisch leitfähig auszugestalten. Ferner soll die Ultraschallschweißeinrichtung dazu eingerichtet sein, erkennen zu können, wenn zwischen diesen beiden Elektroden ein elektrischer Schluss auftritt, d.h. wenn die beiden Elektroden durch ein elektrisch leitendes Element miteinander verbunden werden. Der elektrische Schluss kann hierbei als elektrische Verbindung zwischen der ersten und der zweiten Elektrode verstanden werden, wie sie durch ein elektrisch leitfähiges Element wie beispielsweise ein Kabel mit im Vergleich zu einer Luftstrecke zwischen den beiden Elektroden relativ geringem elektrischem Widerstand etabliert werden kann. Der elektrische Schluss soll von der Ultraschallschweißeinrichtung dahingehend interpretiert werden können, dass der in den Aufhahmeraum eingebrachte Fügepartner in der gewünschten Positionierung angeordnet wurde.

Dem liegt die Überlegung zugrunde, dass zu verschweißende Kabel im Allgemeinen an ihren Enden zuvor abisoliert wurden, sodass ihre elektrisch leitfähigen Litzen freiliegen. Mit diesen freiliegenden Litzen werden die Kabel dann in den Aufhahmeraum der Ultraschallschweißeinrichtung eingeführt. Eine Ausgestaltung des Aufhahmeraums und der ihn seitlich begrenzenden Komponenten kann dabei derart gewählt sein, dass die Kabel dann in einer gewünschten Positionierung angeordnet sind, wenn sie einerseits mit ihrem Stirnende an die die erste Elektrode bildende Oberfläche des Anschlagelements und andererseits seitlich an die die zweite Elektrode bildende Oberfläche einer der den Aufnahmeraum umrandenden Komponenten anliegen. In einer solchen Positionierung verbinden die freiliegenden Litzen die erste Elektrode elektrisch mit der zweiten Elektrode. Somit kann, wenn auf diese Weise ein elektrischer Schluss zwischen den beiden Elektroden erzeugt wurde, dies als Erkennungsmerkmal dafür angesehen werden, dass die Kabel korrekt positioniert wurden.

Gemäß einer Ausfuhrungsform ist zwischen der zu dem Aufnahmeraum gerichteten Oberfläche des Anschlagelements und der zu dem Aufnahmeraum gerichteten Oberfläche der zumindest einen der den Aufnahmeraum umrandend begrenzenden Komponenten eine elektrische Isolierung angeordnet.

Mit anderen Worten ist die Oberfläche des Anschlagelements, welche die erste Elektrode bildet, von der Oberfläche derjenigen Komponente, die die zweite Elektrode bildet, durch eine dazwischenliegende elektrische Isolierung zumindest so lange elektrisch isoliert, solange kein nicht zu der Ultraschallschweißeinrichtung gehörendes Element wie beispielsweise ein in den Aufnahmeraum eingeführtes Kabel diese beiden Oberflächen miteinander kurzschließt.

Die elektrische Isolierung kann dabei durch eine räumliche Beabstandung der die beiden Elektroden bildenden Oberflächen und/oder durch ein sich zwischen diesen Oberflächen bzw. den sie tragenden Komponenten befindliches Isolierelement aus einem elektrisch isolierenden Material bewirkt werden.

Prinzipiell kann die zweite Elektrode von einer zu dem Aufnahmeraum gerichteten Oberfläche einer jeden der den Aufnahmeraum begrenzenden Komponenten, d.h. einer Oberfläche der Sonotrode, des Ambosses, des Touchierelements oder des Seitenschiebers, gebildet werden. Wenn ein Kabel sowohl die von dieser Oberfläche gebildete zweite Elektrode als auch die an dem ersten Anschlagelement gebildete erste Elektrode kontaktiert, kann durch Erkennen des hierdurch bewirkten elektrischen Schlusses sichergestellt werden, dass das Kabel mit seinem Stirnende bis an das Anschlagelement reicht und somit in Einschubrichtung in dem Aufnahmeraum in einer gewünschten Weise positioniert ist.

Allerdings kann hierbei nicht in allen Fällen erkannt werden, wo sich das Kabel quer zu der Einschubrichtung innerhalb des Aufnahmeraums befindet. Wenn die zweite Elektrode beispielsweise von einer sich horizontal erstreckenden Oberfläche der den Aufnahmeraum unten begrenzenden Sonotrode gebildet wird, kann ein Kabel, sofern der Aufnahmeraum breit genug ist, die Sonotrode an unterschiedlichen Positionen kontaktieren, d.h., beispielsweise in deren Mitte oder an einem von deren seitlichen Rändern.

Gemäß einer Ausführungsform kann die die zweite Elektrode bildende Oberfläche sich seitlich neben dem Aufnahmeraum erstrecken.

Anders ausgedrückt kann diejenige Oberfläche, die die zweite Elektrode bildet, lateral an den Aufnahmeraum angrenzen, d.h. sich in einer horizontalen Richtung gesehen neben dem Aufhahmeraum befinden. Mit anderen Worten kann die zweite Elektrode nicht von einer den Aufnahmeraum unten oder oben begrenzenden Oberfläche, sondern von einer den Aufhahmeraum links oder rechtsbegrenzenden Oberfläche gebildet werden.

Hierdurch kann erreicht werden, dass ein in den Aufhahmeraum eingebrachtes Kabel am äußersten seitlichen Rand des Aufnahmeraums angelagert werden muss, um dort mit der die zweite Elektrode bildenden Oberfläche in Kontakt zu kommen und den elektrischen Schluss mit der ersten Elektrode bewirken zu können. Nur bei einer derartigen Positionierung erkennt die Ultraschallschweißeinrichtung aufgrund des bewirkten elektrischen Schlusses, dass das Kabel als Fügepartner in einer gewünschten Positionierung angeordnet wurde. Hierdurch kann sichergestellt werden, dass das Kabel, wenn es von der Ultraschallschweißeinrichtung als korrekt positioniert erkannt wurde, sowohl mit seiner Stirnseite an dem ersten Anschlagelement anliegt als auch mit seiner Mantelfläche an der den Aufnahmeraum seitlich begrenzenden Oberfläche anliegt. Eine Positionierung von Fügepartnern kann damit in zwei Richtungen, das heißt sowohl in der Einschubrichtung in den Aufnahmeraum als auch quer horizontal zu dieser Einschubrichtung, reproduzierbar überprüft werden.

Dabei kann sich gemäß einer Ausführungsform die die zweite Elektrode bildende Oberfläche vertikal erstrecken.

Prinzipiell kann sich die die zweite Elektrode bildende Oberfläche zwar auch in anderen Winkeln zur Horizontalen, d.h. schräg zur Horizontalen, erstrecken. Eine vertikale Ausrichtung der die zweite Elektrode bildenden Oberfläche kann jedoch vorteilhaft sein, da dann ein in den Aufhahmeraum eingebrachter Fügepartner besonders einfach gegen diese Oberfläche angelegt werden kann.

Insbesondere kann gemäß einer Ausführungsform das Touchierelement seitlich neben dem Aufhahmeraum und in horizontaler Richtung stationär relativ zu dem Aufhahmeraum angeordnet sein und
die die zweite Elektrode bildende Oberfläche die zu dem Aufhahmeraum gerichtete Oberfläche des Touchierelements sein.

Das Touchierelement ist in der Schweißeinrichtung im Regelfall an einer den Aufhahmeraum seitlich begrenzenden Ebene angeordnet. Dabei kann das Touchierelement stationär angeordnet sein oder sich beispielsweise zusammen mit dem Amboss in der genannten Ebene bewegen lassen. Als solches eignet sich das Touchierelement besonders gut als Anschlag, gegen den ein Fügepartner seitlich angelegt werden kann, um ihn in gewünschter Weise in dem Aufnahmeraum zu positionieren.

Gemäß einer Ausführungsform ist das erste Anschlagelement zwischen einer eingefahrenen Position und einer ausgefahrenen Position verlagerbar. Das erste Anschlagelement begrenzt hierbei in der eingefahrenen Position den Aufnahmeraum an der fünften Seite und lässt in der ausgefahrenen Position den Aufhahmeraum an der fünften Seite offen.

Es wurde erkannt, dass das die fünfte Seite begrenzende Anschlagelement in bestimmten Fällen hinderlich bzw. unerwünscht sein kann. Beispielsweise kann es gewünscht sein, die Ultraschallschweißeinrichtung auch zum Schweißen sogenannter Durchgangsknoten einsetzen zu können. Die in einer Konfiguration als Durchgangsknoten miteinander verschweißten Kabel bilden eine Verlängerung einer elektrischen Leitung, wohingegen die Konfiguration als Endknoten als eine Art Rückführung der elektrischen Leitung angesehen werden kann. Um einen Durchgangsknoten durch Ultraschallschweißen zu erzeugen, werden Kabel von gegenüberliegenden Seiten her in den Aufhahmeraum eingebracht. Dementsprechend sollten die einander gegenüberliegenden fünften und sechsten Seiten des Aufhahmeraums für diesen Anwendungszweck zumindest nicht permanent von einem Anschlagelement begrenzt werden.

Daher wird vorgeschlagen, das erste Anschlagelement zwar als integrierte Komponente der Ultraschallschweißeinrichtung vorzusehen, d.h., das erste Anschlagelement ist permanent verbunden mit anderen Komponenten der Ultraschallschweißeinrichtung und wechselwirkt mit diesen. Allerdings soll das erste Anschlagelement vorzugsweise nicht stationär in der Ultraschallschweißeinrichtung fixiert sein, sondern es wird vorgeschlagen, dass erste Anschlagelement derart verlagerbar auszugestalten, dass es zwischen einer ersten, sogenannten eingefahrenen Position und einer zweiten, sogenannten ausgefahrenen Position bewegt werden kann. In der eingefahrenen Position begrenzt das erste Anschlagelement dabei den Aufnahmeraum an seiner fünften Seite. Dementsprechend kann es in dieser Konfiguration als mechanischer Anschlag für ein oder mehrere Fügepartner dienen, die von der sechsten Seite her in den Aufnahmeraum eingebracht werden. In der ausgefahrenen Position gibt das Anschlagelement die fünfte Seite jedoch zumindest so weit frei, dass auch von der fünften Seite her ein oder mehrere Fügepartner in den Aufhahmeraum eingebracht werden können. Anders ausgedrückt kann das Anschlagelement der hierin beschriebenen Ultraschallschweißeinrichtung vorzugsweise selektiv ein- oder ausgefahren werden, abhängig zum Beispiel davon, ob ein Endknoten oder ein Durchgangsknoten geschweißt werden soll. Die eingefahrene Position und die ausgefahrene Position können dabei um mehrere Millimeter bis hin zu einigen Zentimetern, beispielsweise zwischen 2 mm und 10 cm, vorzugsweise zwischen 4 mm und 4 cm, voneinander entfernt sein.

Gemäß einer Ausführungsform weist die Ultraschallschweißeinrichtung ferner eine Antriebseinrichtung auf, welche dazu konfiguriert ist, das erste Anschlagelement aktiv zwischen der eingefahrenen Position und der ausgefahrenen Position zu verlagern.

Mit anderen Worten soll die Ultraschallschweißeinrichtung vorzugsweise nicht nur ein lediglich passiv zu bewegendes erstes Anschlagelement aufweisen, welches beispielsweise von einer die Ultraschallschweißeinrichtung bedienenden Person zwischen der eingefahrenen und der ausgefahrenen Position verlagert wird. Stattdessen soll die Ultraschallschweißeinrichtung über eine Antriebseinrichtung verfügen, welche das erste Anschlagelement aktiv von der eingefahrenen Position in die ausgefahrene Position und/oder umgekehrt verlagern kann. Mithilfe einer solchen Antriebseinrichtung kann das Verlagern des ersten Anschlagelements automatisiert werden. Die Antriebseinrichtung kann mit einer Leistungsversorgung verbunden sein. Ferner kann die Antriebseinrichtung mit einer Steuerung verbunden sein oder über eine integrierte Steuerung verfügen, mit der ihr Betrieb gesteuert werden kann.

Details zu der möglichen Verlagerbarkeit des Anschlagelements sowie zu der zu dessen Verlagerung einsetzbaren Antriebseinrichtung sind in einer Patentanmeldung beschrieben, die von der Anmelderin der vorliegenden Anmeldung taggleich mit der vorliegenden Anmeldung eingereicht wird und die den Titel "Ultraschallschweißeinrichtung mit verlagerbarem Anschlagelement" trägt. In dieser parallelen Patentanmeldung sind auch mögliche Ausgestaltungen der Antriebseinrichtung, einer Fügepartner-Detektionseinrichtung, einer Mensch-Maschine-Schnittstelle, einer Sensorik zum Erkennen einer tatsächlichen Position des verlagerbaren Anschlagelements und einer Führung zum Führen des ersten Anschlagelements beschrieben. Der Inhalt dieser parallelen Patentanmeldung soll durch Inbezugnahme vollumfänglich in die vorliegende Patentanmeldung aufgenommen sein.

Gemäß einer weiter entwickelten Ausführungsform kann die Ultraschallschweißeinrichtung ferner ein zweites Anschlagelement aufweisen. Der Aufhahmeraum wird dabei zumindest in einer von dem zweiten Anschlagelement einnehmbaren Positionierungskonstellation ferner an einer sechsten, der fünften Seite gegenüberliegenden Seite von einer zu dem Aufnahmeraum gerichteten Oberfläche des zweiten Anschlagelements begrenzt. Das zweite Anschlagelement ist an seiner zu dem Aufhahmeraum gerichteten Oberfläche elektrisch leitfähig ausgebildet, um eine dritte Elektrode zu bilden. Die Ultraschallschweißeinrichtung ist in diesem Fall ergänzend dazu konfiguriert, einen elektrischen Schluss zwischen der dritten Elektrode und der zweiten Elektrode zu detektieren und darauf basierend die gewünschte Positionierung zumindest eines zu schweißenden Fügepartners zu erkennen.

Das zweite Anschlagelement kann somit auf der entgegengesetzten Seite zu dem ersten Anschlagelement angeordnet sein, sodass beide Anschlagelemente zwischen sich den Aufhahmeraum begrenzen. Das erste Anschlagelement kann dabei dazu dienen, von der sechsten Seite her in den Aufnahmeraum eingeführte Fügepartner so zu positionieren, dass sie an dem ersten Anschlagelement anliegen und somit direkt bis an den dortigen Rand des Aufnahmeraums heranreichen, nicht aber über diesen hinausragen. Das zweite Anschlagelement hingegen kann dazu eingesetzt werden, eine ähnliche Aufgabe für von der entgegengesetzten fünften Seite her eingefügte Fügepartner zu übernehmen, d.h. diese durch stirnseitiges Anlegen an das zweite Anschlagelement derart zu positionieren, dass sie bis an den gegenüberliegenden Rand des Aufnahmeraums heranreichen, nicht aber über diesen hinausragen. Mithilfe der beiden Anschlagelemente können somit Fügepartner nacheinander von beiden gegenüberliegenden Seiten her in dem Aufnahmeraum aufgenommen und geeignet in diesem positioniert werden, um nach dem Ultraschallschweißvorgangs einen qualitativ hochwertigen Durchgangsknoten zu bilden.

Analog wie hinsichtlich des ersten Anschlagelements oben beschrieben, soll die Ultraschallschweißeinrichtung dabei dazu konfiguriert sein, einen elektrischen Schluss zwischen der von dem zweiten Anschlagelement gebildeten dritten Elektrode und der zweiten Elektrode, die von einer der den Aufnahmeraum seitlich begrenzenden Komponenten gebildet wird, detektieren zu können. Wenn ein solcher elektrischer Schluss detektiert wird, kann die Ultraschallschweißeinrichtung darauf basierend erkennen, dass ein Fügepartner in einer gewünschten Positionierung an dem zweiten Anschlagelement anstoßend sowie an der die zweite Elektrode bildenden seitlichen Komponente anliegend positioniert wurde.

Gemäß einer Ausführungsform kann auch das zweite Anschlagelement zwischen einer eingefahrenen Position und einer ausgefahrenen Position verlagerbar sein, wobei das zweite Anschlagelement in der eingefahrenen Position den Aufnahmeraum an der sechsten Seite zumindest bereichsweise begrenzt und in der ausgefahrenen Position den Aufnahmeraum an der sechsten Seite offen lässt.

Anders ausgedrückt kann das zweite Anschlagelement ähnlich wie das erste Anschlagelement zwischen einer eingefahrenen Position und einer ausgefahrenen Position verlagerbar sein. Dementsprechend kann das zweite Anschlagelement, während das erste Anschlagelement an seiner eingefahrenen Position angeordnet ist, in seine ausgefahrene Position verlagert sein, sodass die sechste Seite des Aufhahmeraums geöffnet ist und von dort her kommend ein oder mehrere Fügepartner in den Aufhahmeraum eingeschoben werden können, bis sie am ersten Anschlagelement anliegen. Anschließend kann das erste Anschlagelement in seine ausgefahrene Position verlagert werden und das zweite Anschlagelement in seine eingefahrene Position gebracht werden. In dieser Konfiguration ist dann die fünfte Seite des Aufnahmeraums offen, sodass ein oder mehrere Fügepartner von dort her kommend in den Aufhahmeraum eingeschoben werden können, bis sie am zweiten Anschlagelement anliegen. Das Verlagern des ersten und des zweiten Anschlagelements kann unabhängig voneinander oder in Abhängigkeit von einander erfolgen. Es kann ferner voll- oder teilautomatisiert erfolgen.

Gemäß einer konkretisierten Ausführungsform kann hierbei das zweite Anschlagelement mehrere längliche Segmente aufweisen, welche sich jeweils in einer Richtung entlang der sechsten Seite und parallel zueinander erstrecken. Jedes der Segmente kann dabei unabhängig von benachbarten Segmenten zwischen der eingefahrenen Position und der ausgefahrenen Position verlagerbar sein.

Mit anderen Worten kann das zweite Anschlagelement vorzugsweise mehrstückig ausgebildet sein. Eine von dem zweiten Anschlagelement gebildete Begrenzung des Aufhahmeraums an dessen sechster Seite kann hierbei aus mehreren Segmenten zusammengesetzt sein. Jedes einzelne Segment kann länglich ausgebildet sein und sich entlang der sechsten Seite bzw. in deren Verlängerung oder parallel zu dieser erstrecken. Die verschiedenen Segmente können sich dabei parallel zueinander erstrecken und somit, wenn sie in ihre eingefahrene Position verlagert sind, mit ihren Oberflächen die sechste Seite des Aufhahmeraums zumindest bereichsweise abdecken.

Die Segmente können unabhängig voneinander zwischen der eingefahrenen Position und der ausgefahrenen Position verlagert werden. Anders ausgedrückt kann jedes der Segmente in seiner Längserstreckungsrichtung unabhängig von benachbarten Segmenten verlagert werden. Dementsprechend können einige der Segmente beispielsweise in ihrer ausgefahrenen Position verharren, während andere der Segmente in ihre eingefahrene Position verlagert werden oder in eine dazwischenliegende Position.

Durch diesen segmentartigen Aufbau des zweiten Anschlagelements kann bewirkt werden, dass die von ihm zu realisierende Begrenzung an der sechsten Seite des Aufhahmeraums bei Bedarf nicht die gesamte sechste Seite, sondern nur Teile derselben, abdecken kann. Dies kann vorteilhaft sein, wenn beispielsweise zuvor Fügepartner von der sechsten Seite her kommend in dem Aufhahmeraum positioniert wurden, sodass der Aufnahmeraum an seiner sechsten Seite nicht mehr vollständig verschlossen werden kann. In diesem Fall können diejenigen Segmente, welche einen Teilbereich der sechsten Seite abdecken würden, aus dem die bereits eingebrachten Fügepartner nach außen heraus verlaufen, in ihrer ausgefahrenen Position verbleiben, wohingegen die anderen Segmente einen angrenzenden Teilbereich der sechsten Seite abdecken können, indem sie in ihre eingefahrene Position verlagert werden. Die in die eingefahrene Position verlagerten Segmente können dann einen physischen Anschlag für von der gegenüberliegenden fünften Seite her eingebrachte Fügepartner bilden.

Die Ultraschallschweißeinrichtung kann ferner eine Antriebseinrichtung zum Antreiben des zweiten Anschlagsegments sowie weitere Details, wie sie in der weiter oben bereits genannten, von der Anmelderin parallel eingereichten Patentanmeldung beschrieben sind, aufweisen.

Gemäß einer Ausführungsform ist die Ultraschallschweißeinrichtung dazu konfiguriert, bei Detektieren eines elektrischen Schlusses zwischen der ersten Elektrode und der zweiten Elektrode ein für einen Bediener der Ultraschallschweißeinrichtung wahrnehmbares Signal auszugeben.

Mit anderen Worten kann die Ultraschallschweißeinrichtung zwischen den die erste und die zweite Elektrode bildenden Komponenten eine Überwachungseinrichtung aufweisen, welche permanent oder in gewissen Zeitabständen überprüft, ob zwischen der ersten und der zweiten Elektrode eine elektrische Verbindung existiert. Hierzu kann zwischen den Elektroden beispielsweise eine elektrische Spannung angelegt werden und überwacht werden, ob daraufhin ein elektrischer Strom fließt. Wenn auf diese Weise ein elektrischer Schluss detektiert wird, kann von der Ultraschallschweißeinrichtung ein Signal ausgegeben werden, welches von einem Bediener optisch, akustisch, haptisch oder in anderer Weise wahrgenommen werden kann. Hierzu kann die Ultraschallschweißeinrichtung beispielsweise über ein Lämpchen, eine LED, eine optische Anzeige, einen Lautsprecher, einen Piepser oder Ähnliches verfügen. Wenn der Bediener das Signal wahrnimmt, erkennt er, dass beispielsweise das von ihm in den Aufhahmeraum eingebrachte Kabel korrekt positioniert wurde.

Gemäß einer Ausführungsform kann die Ultraschallschweißeinrichtung ergänzend oder alternativ dazu konfiguriert sein, ausschließlich bei Detektieren eines elektrischen Schlusses zwischen der ersten Elektrode und der zweiten Elektrode eine Durchführung eines Schweißvorgangs freizugeben.

Anders ausgedrückt kann die Ultraschallschweißeinrichtung nur dann zulassen, dass ein Schweißvorgang durchgeführt wird, wenn zuvor der elektrische Schluss zwischen den beiden Elektroden detektiert wurde und somit davon ausgegangen werden kann, dass Schweißpartner in dem Aufhahmeraum korrekt positioniert worden sind. Hierzu können die beiden Elektroden beispielsweise Teil eines Sicherheitskreises sein, der elektrisch geschlossen werden muss, bevor die Ultraschallschweißeinrichtung einen Schweißvorgang beginnen kann.

Gemäß einer weiteren Ausführungsform kann die Ultraschallschweißeinrichtung ergänzend oder alternativ dazu konfiguriert sein, bei Detektieren eines elektrischen Schlusses zwischen der ersten Elektrode und der zweiten Elektrode eine Durchführung eines Schweißvorgangs automatisch zu initiieren.

In diesem Fall kann die Ultraschallschweißeinrichtung beispielsweise darauf verzichten, dass ein Bediener einen Schweißvorgang manuell auslöst, beispielsweise indem ein Startknopf betätigt wird. Stattdessen kann die Ultraschallschweißeinrichtung warten, bis der elektrische Schluss zwischen den beiden Elektroden detektiert wird, und dann davon ausgehen, dass die zu verschweißenden Fügepartner korrekt in dem Aufhahmeraum angeordnet wurden und daraufhin den Schweißvorgang initiieren. Gegebenenfalls müssen ergänzend Sicherheitsmaßnahmen getroffen werden, um eine Gefährdung des Bedieners durch die automatisiert arbeitende Ultraschallschweißeinrichtung zu vermeiden.

Es wird darauf hingewiesen, dass mögliche Merkmale und Vorteile von Ausführungsformen der Erfindung hierin teilweise mit Bezug auf eine erfindungsgemäß ausgestaltete Ultraschallschweißeinrichtung und teilweise mit Bezug auf eine Art und Weise, wie diese betrieben oder verwendet werden kann, beschrieben sind. Ein Fachmann wird erkennen, dass die für einzelne Ausführungsformen beschriebenen Merkmale in analoger Weise geeignet auf andere Ausführungsformen übertragen werden können, angepasst werden können und/oder ausgetauscht werden können, um zu weiteren Ausführungsformen der Erfindung und möglicherweise Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Fig. 1 zeigt eine stark schematisierte Seitenansicht auf eine Ultraschallschweißeinrichtung gemäß einer Ausführungsform der vorliegenden Erfindung.
Fig. 2 zeigt eine perspektivische Ansicht auf eine Ultraschallschweißeinrichtung gemäß einer Ausführungsform der vorliegenden Erfindung in einer ersten Konfiguration mit einem ersten Anschlagelement in seiner eingefahrenen Position.
Fig. 3 zeigt eine perspektivische Ansicht auf eine Ultraschallschweißeinrichtung gemäß einer Ausführungsform der vorliegenden Erfindung in einer zweiten

Konfiguration mit einem zweiten Anschlagelement in seiner eingefahrenen Position.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

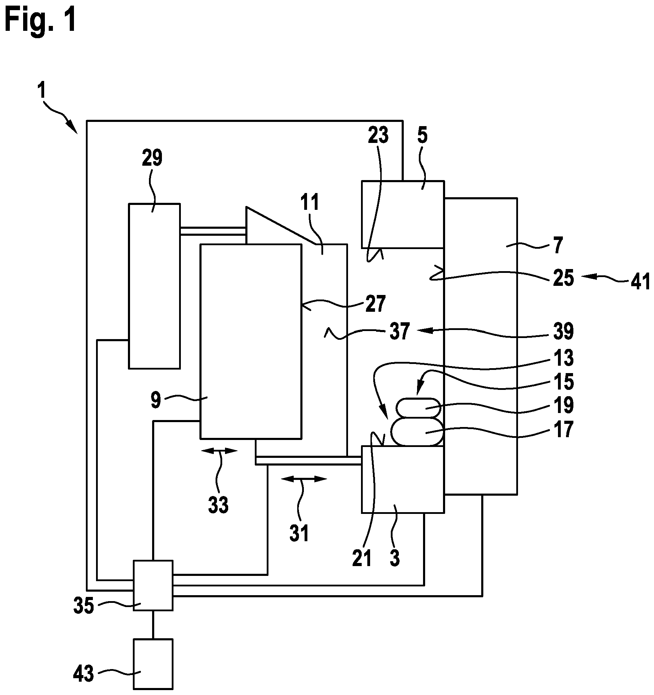

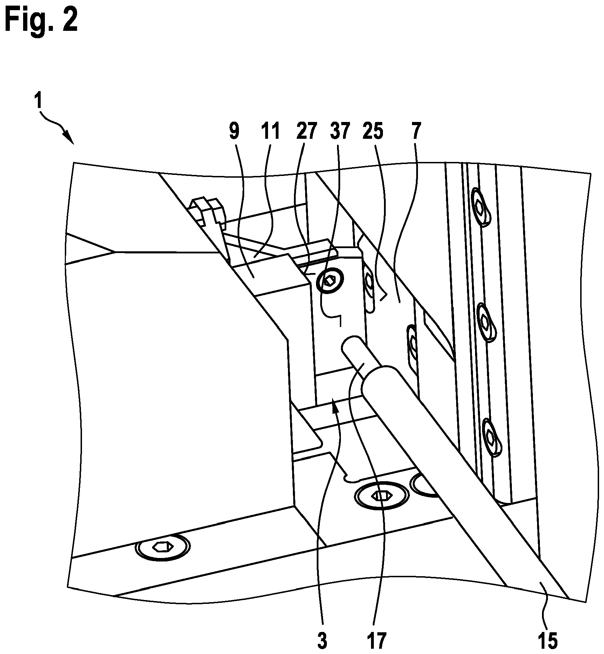

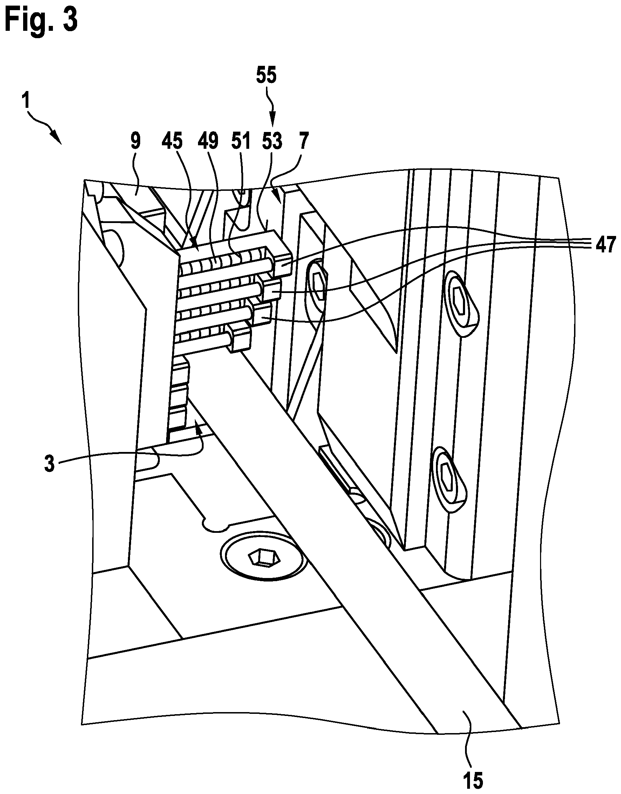

Fig. 1 zeigt in einer stark schematisierten Weise eine Ultraschallschweißeinrichtung 1 gemäß einer Ausführungsform der vorliegenden Erfindung. Die Ultraschallschweißeinrichtung 1 ist in einer konkreten Ausgestaltung in perspektivischer Ansicht und bezüglich einiger Hauptkomponenten mit etwas mehr Details in zwei verschiedenen Konfigurationen auch in Fig. 2 und Fig. 3 dargestellt.

Die Ultraschallschweißeinrichtung 1 weist eine Sonotrode 3, einen Amboss 5, ein Touchierelement 7 und einen Seitenschieber 9 auf. Die genannten Komponenten umgeben rahmenartig einen Aufnahmeraum 13, in dem Fügepartner 15 wie beispielsweise eine erste Litze 17 eines ersten Kabels und eine zweite Litze 19 eines zweiten Kabels aufgenommen sein können. Eine erste Seite (im dargestellten Beispiel unten) des Aufnahmeraums 13 wird dabei von einer Oberfläche 21 der Sonotrode 3 begrenzt. Eine der ersten Seite gegenüberliegende zweite Seite (im dargestellten Beispiel oben) des Arbeitsraums 13 wird von einer Oberfläche 23 des Ambosses 5 begrenzt. Eine dritte Seite (im dargestellten Beispiel rechts) des Aufnahmeraums 13 wird von einer Oberfläche 25 des Touchierelements 7 begrenzt. Und eine der dritten Seite gegenüberliegende vierte Seite (im dargestellten Beispiel links) des Aufnahmeraums 13 wird von einer Oberfläche 27 des Seitenschiebers 9 begrenzt. Im dargestellten Beispiel verlaufen die Oberflächen 21 und 23 der Sonotrode 3 und des Ambosses 5 jeweils horizontal und parallel zueinander, wohingegen die Oberflächen 25 und 27 des Touchierelements 7 und des Seitenschiebers 9 jeweils vertikal und wiederum parallel zueinander verlaufen. Der von den genannten Oberflächen 21, 23, 25, 27 begrenzte Aufnahmeraum 13 ist somit näherungsweise quaderförmig.

Wie insbesondere in den perspektivisch dargestellten Figuren 2 und 3 gut zu erkennen, ist hinter dem Seitenschieber 9 ein erstes Anschlagelement 11 vorgesehen. Dieses erste Anschlagelement 11 kann, wie in Fig. 2 dargestellt, in einer eingefahrenen Position angeordnet sein, bei der es den Aufnahmeraum 13 an einer fünften Seite (im dargestellten Beispiel hinten) begrenzt. Bei Bedarf kann das erste Anschlagelement 11 in eine ausgefahrene Position verlagert werden, bei der es den Aufnahmeraum 13 an der fünften Seite offen lässt.

Aus Übersichtlichkeitsgründen sind in den Fign. 2 und 3 nur einige der Hauptkomponenten der Ultraschallschweißeinrichtung dargestellt, einige der nachfolgend erläuterten optionalen Komponenten sind jedoch nur in Fig. 1 schematisch veranschaulicht und in Fig. 2 und 3 weggelassen.

Das erste Anschlagelement 11 kann mithilfe einer Antriebseinrichtung 29 entlang einer Verlagerungsrichtung 31 zwischen der eingefahrenen Position und der ausgefahrenen Position verlagert werden. Hierfür kann die Antriebseinrichtung 29 von einer Steuerung 35 gesteuert werden. Die Steuerung 35 kann als separate Komponente oder integriert in die Antriebseinrichtung 29 ausgebildet sein.

Die Steuerung 35 kann ferner auch Verlagerungsbewegungen des verlagerbaren Amboss 5 und/oder des verlagerbaren Seitenschiebers 9 steuern. Außerdem kann die Steuerung 35 einen Betrieb der Sonotrode 3 steuern.

Um erkennen zu können, ob beispielsweise von einem Bediener der Ultraschallschweißeinrichtung 1 die als Fügepartner 15 wirkenden beiden Litzen 17, 19 an einer hierfür als vorteilhaft angesehenen Position innerhalb des Aufnahmeraums 13 angeordnet wurden, ist die Ultraschallschweißeinrichtung 1 mit einer Funktionalität ausgestattet, mithilfe derer eine solche Positionierung erkannt werden kann.

Hierzu ist im dargestellten Beispiel zumindest die zum Aufnahmeraum 13 hin gerichtete Oberfläche 37 des ersten Anschlagelements 11 elektrisch leitfähig ausgebildet und wirkt somit als erste Elektrode 39. Ferner ist in dem dargestellten Beispiel die zu dem Aufnahmeraum 13 gerichtete Oberfläche 25 des Touchierelements 7 elektrisch leitfähig ausgebildet und wirkt somit als zweite Elektrode 41. Dabei sind die in der Ultraschallschweißeinrichtung 1 derart ausgebildeten beiden Elektroden 39, 41 derart angeordnet bzw. derart durch elektrisch isolierende Materialien oder Komponenten voneinander getrennt, dass zwischen ihnen durch Komponenten der Ultraschallschweißeinrichtung 1 selbst hindurch keine elektrische Verbindung existiert.

Die Ultraschallschweißeinrichtung 1 ist hierbei dazu ausgebildet, einen elektrischen Schluss zwischen diesen beiden Elektroden 39, 41 zu erkennen. Hierzu kann beispielsweise die Steuerung 35 mit den die Elektroden 39, 41 bildenden Komponenten elektrisch verbunden sein und erkennen, wenn sich zwischen diesen Komponenten ein elektrischer Pfad schließt.

Ein derartiger elektrischer Schluss kann, wie in Fig. 2 dargestellt, durch die abisolierte Litze 17 eines als Fügepartner 15 dienenden Kabels erzeugt werden. Wenn das Kabel an einer hierfür bevorzugten Position innerhalb des Aufhahmeraums 13 angeordnet ist, kontaktiert die Litze 17 an ihrer Stirnseite einerseits die erste Elektrode 39 in Form der zu dem Aufnahmeraum 13 gerichteten Oberfläche 37 des Anschlags 11 sowie andererseits die zweite Elektrode 41 in Form der zu dem Aufhahmeraum 13 gerichteten Oberfläche 25 des Touchierelements 7.

Aufgrund des hierdurch bewirkten elektrischen Schlusses kann die Steuerung 35 beispielsweise eine Signalerzeugungseinrichtung 43 dazu ansteuern, ein für den Bediener der Ultraschallschweißeinrichtung 1 wahrnehmbares Signal auszugeben. Alternativ oder ergänzend kann vorgesehen sein, dass die Steuerung 35 die Durchführung eines Schweißvorgangs ausschließlich dann zulässt, wenn der genannte elektrische Schluss zwischen den beiden Elektroden 39, 41 erkannt wird und somit von einer gewünschten Positionierung der Fügepartner 15 ausgegangen werden kann. Eventuell kann ein Schweißvorgang daraufhin sogar automatisiert initiiert werden.

Fig. 3 veranschaulicht eine Konfiguration der Ultraschallschweißeinrichtung 1, bei der ein zweites Anschlagelement 45 zumindest bereichsweise in seine eingefahrene Position verlagert wurde. Das zweite Anschlagelement 45 erstreckt sich angrenzend an den Aufhahmeraum 13 an der der fünften Seite gegenüberliegenden sechsten Seite. Somit kann das zweite Anschlagelement 45 als mechanischer Anschlag für Fügepartner 15 dienen, die von der fünften Seite her in den Aufnahmeraum 13 eingeführt wurden.

Das zweite Anschlagelement 45 ist dabei nicht wie das erste Anschlagelement 11 als einfache einstückige Platte ausgestaltet, sondern verfügt über mehrere längliche Segmente 47. Die Segmente 47 können unabhängig voneinander in die eingefahrene und/oder die ausgefahrene Position verlagert werden. Hierzu ist jedes der Segmente 47 mit einem Segmentbewegungselement 49 gekoppelt, dass von einer Antriebseinrichtung (nicht dargestellt) verlagert werden kann. Das Segmentbewegungselement 49 überträgt eine Bewegung der Antriebseinrichtung jedoch nicht starr auf das zugehörige Segment 47. Stattdessen ist das Segment 47 über eine Feder 51 mit dem Segmentbewegungselement 49 gekoppelt. Auf diese Weise kann erreicht werden, dass das jeweilige Segment 47, wenn es von seinem Segmentbewegungselement 49 hin zu der eingefahrenen Position kraftbeaufschlagt wird, zwar hin zu der eingefahrenen Position elastisch vorgespannt wird, sich aber nicht tatsächlich zwingend hinzu der eingefahrenen Position bewegt. Stattdessen können Segmente 47, die bei einer Bewegung hin zu der eingefahrenen Position auf ein Hindernis wie beispielsweise im Aufhahmeraum 13 angeordnete Fügepartner 15 treffen, von diesem Hindernis aufgehalten werden. Diese Segmente 47 drücken dann elastisch vorgespannt auf das Hindernis. Dies kann dazu genutzt werden, bereits in dem Aufhahmeraum 13 angeordnete Fügepartner 15 temporär zu fixieren. Dies ist in Fig. 3 für die unteren drei Segmente 47 dargestellt. Diejenigen Segmente 47, die auf kein Hindernis stoßen, werden hin zu der eingefahrenen Position verlagert. Sie bilden dann dort eine Begrenzung des Aufnahmeraums 13, an der von der entgegengesetzten Seite eingeführte Fügepartner mechanisch anliegen und somit ausgerichtet werden können. Dies ist in Fig. 3 für die oberen vier Segmente 47 dargestellt.

Das zweite Anschlagelement 45 ist an seiner zu dem Aufhahmeraum 13 gerichteten Oberfläche 53 wiederum elektrisch leitfähig ausgebildet, um auf diese Weise eine dritte Elektrode 55 zu bilden. Die Ultraschallschweißeinrichtung 1 bzw. deren Steuerung 35 ist hierbei dazu konfiguriert, auch einen elektrischen Schluss zwischen dieser dritten Elektrode 55 und der zweiten Elektrode 41 an dem Touchierelements 7 zu detektieren.

Auf diese Weise kann auch für Litzen von Kabeln, die von der hinteren sechsten Seite her in den Aufhahmeraum 13 eingelegt werden sollen, erkannt werden, ob diese in einer gewünschten Weise angrenzend an das Touchierelement 7 sowie anstoßend an das zweite Anschlagelement 45 positioniert wurden.

Mit dem hierin beschriebenen Ansatz einer Funktionalität zum Erkennen einer gewünschten Positionierung von zu schweißenden Fügepartnern 15 innerhalb einer Ultraschallschweißeinrichtung 1 kann eine einfachere Bedienbarkeit der Ultraschallschweißeinrichtung 1 insbesondere für wenig trainierte Bediener bei gleichbleibender Qualität der Schweißung erreicht werden. Insbesondere kann erkannt werden, ob ein Schweißknoten an der richtigen Position ist. Hierdurch kann eine konstante Qualität bei den erzeugten Schweißknoten erreicht werden. Die Erzeugung von Fehlteilen kann weitgehend vermieden werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Ultraschweißeinrichtung
- 3: Sonotrode
- 5: Amboss
- 7: Touchierelement
- 9: Seitenschieber
- 11: erstes Anschlagelement
- 13: Aufnahmeraum
- 15: Fügepartner
- 17: erste Litze
- 19: zweite Litze
- 21: Oberfläche der Sonotrode
- 23: Oberfläche des Ambosses
- 25: Oberfläche des Touchierelements
- 27: Oberfläche des Seitenschiebers
- 29: Antriebseinrichtung
- 31: Verlagerungsrichtung des ersten Anschlagelements
- 33: Verlagerungsrichtung des Seitenschiebers
- 35: Steuerung
- 37: Oberfläche des ersten Anschlagelements
- 39: erste Elektrode
- 41: zweite Elektrode
- 43: Signalerzeugungseinrichtung
- 45: zweites Anschlagelement
- 47: Segmente
- 49: Segmentbewegungselement
- 51: Federn
- 53: Oberfläche des zweiten Anschlagelements
- 55: dritte Elektrode

## Patentansprüche

1. Ultraschallschweißeinrichtung (), wobei die Ultraschallschweißeinrichtung zumindest folgende Komponenten aufweist:
eine Sonotrode (3);
einen Amboss (5);
ein Touchierelement (7);
einen Seitenschieber (9);
ein erstes Anschlagelement (11); und
einen Aufhahmeraum (13), in welchem Fügepartner (15) aufzunehmen sind und der von Komponenten (3, 5, 7, 9) der Ultraschallschweißeinrichtung umrandend begrenzt ist;
wobei der Aufnahmeraum an einer ersten Seite von einer Oberfläche (21) der Sonotrode und an einer der ersten Seite gegenüberliegenden zweiten Seite von einer Oberfläche (23) des Ambosses begrenzt wird;
wobei der Aufnahmeraum ferner an einer dritten Seite von einer Oberfläche (25) des Touchierelements und an einer der dritten Seite gegenüberliegenden vierten Seite von einer Oberfläche (27) des Seitenschiebers begrenzt wird;
wobei der Aufnahmeraum zumindest in einer von dem ersten Anschlagelement einnehmbaren Positionierungskonstellation ferner an einer fünften, quer zu den ersten bis vierten Seiten verlaufenden Seite von einer zu dem Aufnahmeraum gerichteten Oberfläche (37) des ersten Anschlagelements begrenzt wird;
**dadurch gekennzeichnet, dass**
das erste Anschlagelement an seiner zu dem Aufhahmeraum gerichteten Oberfläche elektrisch leitfähig ausgebildet ist, um eine erste Elektrode (39) zu bilden;
wobei zumindest eine der den Aufnahmeraum umrandend begrenzenden Komponenten einschließend die Sonotrode, den Amboss, das Touchierelement und den Seitenschieber an ihrer jeweils zu dem Aufnahmeraum gerichteten Oberfläche (21, 23, 25, 27) elektrisch leitfähig ausgebildet ist, um eine zweite Elektrode (41) zu bilden;
wobei die Ultraschallschweißeinrichtung eine Funktionalität zum Erkennen einer gewünschten Positionierung von zu schweißenden Fügepartnern innerhalb der Ultraschallschweißeinrichtung aufweist,wobei die Ultraschallschweißeinrichtung dazu konfiguriert ist, einen elektrischen Schluss zwischen der ersten Elektrode und der zweiten Elektrode zu detektieren und darauf basierend die gewünschte Positionierung zumindest eines zu schweißenden Fügepartners zu erkennen.

2. Ultraschallschweißeinrichtung (1) nach Anspruch 1, wobei zwischen der zu dem Aufhahmeraum gerichteten Oberfläche (37) des Anschlagelements und der zu dem Aufhahmeraum gerichteten Oberfläche (21, 23, 25, 27) der zumindest einen der den Aufhahmeraum umrandend begrenzenden Komponenten eine elektrische Isolierung angeordnet ist.

3. Ultraschallschweißeinrichtung nach einem der vorangehenden Ansprüche, wobei die die zweite Elektrode (41) bildende Oberfläche sich seitlich neben dem Aufhahmeraum erstreckt.

4. Ultraschallschweißeinrichtung nach einem der vorangehenden Ansprüche, wobei die die zweite Elektrode bildende Oberfläche sich vertikal erstreckt.

5. Ultraschallschweißeinrichtung nach einem der vorangehenden Ansprüche,
wobei das Touchierelement seitlich neben dem Aufhahmeraum und in horizontaler Richtung stationär relativ zu dem Aufnahmeraum angeordnet ist, und
wobei die die zweite Elektrode bildende Oberfläche die zu dem Aufnahmeraum gerichtete Oberfläche des Touchierelements ist.

6. Ultraschallschweißeinrichtung nach einem der vorangehenden Ansprüche,
wobei das erste Anschlagelement zwischen einer eingefahrenen Position und einer ausgefahrenen Position verlagerbar ist;
wobei das erste Anschlagelement in der eingefahrenen Position den Aufnahmeraum an der fünften Seite begrenzt und in der ausgefahrenen Position den Aufhahmeraum an der fünften Seite offen lässt.

7. Ultraschallschweißeinrichtung (1) nach Anspruch 6,
ferner aufweisend eine Antriebseinrichtung (29), welche dazu konfiguriert ist, das erste Anschlagelement aktiv zwischen der eingefahrenen Position und der ausgefahrenen Position zu verlagern.

8. Ultraschallschweißeinrichtung nach einem der vorangehenden Ansprüche, ferner aufweisend ein zweites Anschlagelement (45),
wobei der Aufnahmeraum zumindest in einer von dem zweiten Anschlagelement einnehmbaren Positionierungskonstellation ferner an einer sechsten, der fünften Seite gegenüberliegenden Seite von einer zu dem Aufhahmeraum gerichteten Oberfläche (53) des zweiten Anschlagelements begrenzt wird;
wobei das zweite Anschlagelement an seiner zu dem Aufhahmeraum gerichteten Oberfläche elektrisch leitfähig ausgebildet ist, um eine dritte Elektrode (55) zu bilden; wobei die Ultraschallschweißeinrichtung dazu konfiguriert ist, einen elektrischen Schluss zwischen der dritten Elektrode und der zweiten Elektrode zu detektieren und darauf basierend die gewünschte Positionierung zumindest eines zu schweißenden Fügepartners zu erkennen.

9. Ultraschallschweißeinrichtung nach Anspruch 8,
wobei das zweite Anschlagelement zwischen einer eingefahrenen Position und einer ausgefahrenen Position verlagerbar ist, wobei das zweite Anschlagelement in der eingefahrenen Position den Aufhahmeraum an einer sechsten Seite zumindest bereichsweise begrenzt und in der ausgefahrenen Position den Aufhahmeraum an der sechsten Seite offen lässt.

10. Ultraschallschweißeinrichtung nach einem der Ansprüche 8 und 9,
wobei das zweite Anschlagelement mehrere längliche Segmente (47) aufweist, welche sich jeweils in einer Richtung entlang der sechsten Seite und parallel zueinander erstrecken,
wobei jedes der Segmente unabhängig von benachbarten Segmenten zwischen der eingefahrenen Position und der ausgefahrenen Position verlagerbar ist.

11. Ultraschallschweißeinrichtung nach einem der vorangehenden Ansprüche, wobei die Ultraschallschweißeinrichtung dazu konfiguriert ist, bei Detektieren eines elektrischen Schlusses zwischen der ersten Elektrode und der zweiten Elektrode ein für einen Bediener der Ultraschallschweißeinrichtung wahrnehmbares Signal auszugeben.

12. Ultraschallschweißeinrichtung nach einem der vorangehenden Ansprüche, wobei die Ultraschallschweißeinrichtung dazu konfiguriert ist, ausschließlich bei Detektieren eines elektrischen Schlusses zwischen der ersten Elektrode und der zweiten Elektrode eine Durchführung eines Schweißvorgangs freizugeben.

13. Ultraschallschweißeinrichtung nach einem der vorangehenden Ansprüche, wobei die Ultraschallschweißeinrichtung dazu konfiguriert ist, bei Detektieren eines elektrischen Schlusses zwischen der ersten Elektrode und der zweiten Elektrode eine Durchführung eines Schweißvorgangs automatisch zu initiieren.

## Claims

1. Ultrasound welding device (1), wherein the ultrasound welding device has at least the following components:
a sonotrode (3);
an anvil (5);
a touching element (7);
a lateral slider (9);
a first stop element (11); and
a receiving chamber (13), in which joint partners (15) are to be received and which is peripherally delimited by components (3, 5, 7, 9) of the ultrasound welding device;
the receiving chamber being delimited on a first side by a surface (21) of the sonotrode and on a second side opposite the first side by a surface (23) of the anvil;
the receiving chamber further being delimited on a third side by a surface (25) of the touching element and on a fourth side opposite the third side by a surface (27) of the lateral slider;
the receiving chamber further being delimited, at least in one positioning arrangement which can be adopted by the first stop element, on a fifth side extending transverse to the first to fourth sides by a surface (37), facing the receiving chamber, of the first stop element;
**characterised in that**
the first stop element is formed electrically conductive on the surface thereof facing the receiving chamber, so as to form a first electrode (39);
at least one of the components which peripherally delimit the receiving chamber, including the sonotrode, the anvil, the touching element and the lateral slider, being formed electrically conductive on the surface (21, 23, 25, 27) thereof facing the receiving chamber so as to form a second electrode (41);
the ultrasound welding device having a functionality for discerning a desired positioning of joint partners which are to be welded within the ultrasound welding device, the ultrasound welding device being configured to detect an electrical connection between the first electrode and the second electrode and to discern on the basis thereof the desired positioning of at least one joint partner which is to be welded.

2. Ultrasound welding device (1) according to claim 1, wherein an electrical insulator is arranged between the surface (37), facing the receiving chamber, of the stop element and the surface (21, 23, 25, 27), facing the receiving chamber, of the at least one of the components which peripherally delimit the receiving chamber.

3. Ultrasound welding device according to any of the preceding claims, wherein the surface forming the second electrode (41) extends laterally alongside the receiving chamber.

4. Ultrasound welding device according to any of the preceding claims, wherein the surface forming the second electrode extends vertically.

5. Ultrasound welding device according to any of the preceding claims, wherein the touching element is arranged laterally alongside the receiving chamber and stationary in a horizontal direction relative to the receiving chamber, and wherein the surface forming the second electrode is the surface, facing the receiving chamber, of the touching element.

6. Ultrasound welding device according to any of the preceding claims,
wherein the first stop element is displaceable between a retracted position and an extended position;
wherein the first stop element delimits the receiving chamber on the fifth side in the retracted position and leaves the receiving chamber open on the fifth side in the extended position.

7. Ultrasound welding device (1) according to claim 6, further having a drive device (29) configured to displace the first stop element actively between the retracted position and the extended position.

8. Ultrasound welding device according to any of the preceding claims,
further having a second stop element (45),
wherein the receiving chamber is further delimited, at least in one positioning arrangement which can be adopted by the second stop element, on a sixth side opposite the fifth side by a surface (53), facing the receiving chamber, of the second stop element;
wherein the second stop element is formed electrically conductive on the surface thereof facing the receiving chamber, so as to form a third electrode (55);
wherein the ultrasound welding device is configured to detect an electrical connection between the third electrode and the second electrode and to discern on the basis thereof the desired positioning of at least one joint partner which is to be welded.

9. Ultrasound welding device according to claim 8,
wherein the second stop element is displaceable between a retracted position and an extended position, the second stop element delimiting the receiving chamber at least in regions on a sixth side in the retracted position and leaving the receiving chamber open on the sixth side in the extended position.

10. Ultrasound welding device according to any of claims 8 and 9,
wherein the second stop element has a plurality of elongate segments (47) which each extend in a direction along the sixth side and parallel to one another,
wherein each of the segments is displaceable between the retracted position and the extended position independently of adjacent segments.

11. Ultrasound welding device according to any of the preceding claims,
wherein the ultrasound welding device is configured to output a signal perceptible to an operator of the ultrasound welding device when an electrical connection between the first electrode and the second electrode is detected.

12. Ultrasound welding device according to any of the preceding claims,
wherein the ultrasound welding device is configured to trigger performance of a welding process exclusively if an electrical connection between the first electrode and the second electrode is detected.

13. Ultrasound welding device according to any of the preceding claims,
wherein the ultrasound welding device is configured to initiate performance of a welding process automatically if an electrical connection between the first electrode and the second electrode is detected.

## Revendications

1. Dispositif de soudage par ultrasons (1), le dispositif de soudage par ultrasons comprenant au moins les composants suivants :
une sonotrode (3) ;
une enclume (5) ;
un élément de contact (7) ;
un curseur latéral (9) ;
un premier élément de butée (11) ; et
un espace de réception (13) dans lequel des partenaires d'assemblage (15) doivent être reçus et qui est délimité périphériquement par des composants (3, 5, 7, 9) du dispositif de soudage par ultrasons ;
dans lequel l'espace de réception est délimité sur un premier côté par une surface (21) de la sonotrode et sur un deuxième côté, opposé au premier côté, par une surface (23) de l'enclume ;
dans lequel l'espace de réception est en outre délimité sur un troisième côté par une surface (25) de l'élément de contact et sur un quatrième côté, opposé au troisième côté, par une surface (27) du curseur latéral ;
dans lequel l'espace de réception est en outre délimité, au moins dans une configuration de positionnement pouvant être adoptée par le premier élément de butée, sur un cinquième côté s'étendant transversalement aux premier à quatrième côtés, par une surface (37) du premier élément de butée orientée vers l'espace de réception ;
**caractérisé en ce que**
le premier élément de butée est réalisé électriquement conducteur sur sa surface orientée vers l'espace de réception afin de former une première électrode (39) ;
dans lequel au moins un des composants délimitant périphériquement l'espace de réception, y compris la sonotrode, l'enclume, l'élément de contact et le curseur latéral, est réalisé électriquement conducteur sur sa surface respective (21, 23, 25, 27) orientée vers l'espace de réception afin de former une deuxième électrode (41) ;
dans lequel le dispositif de soudage par ultrasons présente une fonctionnalité pour reconnaître un positionnement souhaité de partenaires d'assemblage à souder à l'intérieur du dispositif de soudage par ultrasons,
dans lequel le dispositif de soudage par ultrasons est configuré pour détecter un court-circuit entre la première électrode et la deuxième électrode et pour reconnaître, sur cette base, le positionnement souhaité d'au moins un des partenaires d'assemblage à souder.

2. Dispositif de soudage par ultrasons (1) selon la revendication 1, dans lequel une isolation électrique est disposée entre la surface (37) de l'élément de butée orientée vers l'espace de réception et la surface (21, 23, 25, 27) orientée vers l'espace de réception dudit au moins un des composants délimitant périphériquement l'espace de réception.

3. Dispositif de soudage par ultrasons selon l'une des revendications précédentes, dans lequel la surface formant la deuxième électrode (41) s'étend latéralement à côté de l'espace de réception.

4. Dispositif de soudage par ultrasons selon l'une des revendications précédentes, dans lequel la surface formant la deuxième électrode s'étend verticalement.

5. Dispositif de soudage par ultrasons selon l'une des revendications précédentes,
dans lequel l'élément de contact est disposé latéralement à côté de l'espace de réception et de manière stationnaire dans la direction horizontale par rapport à l'espace de réception, et
dans lequel la surface formant la deuxième électrode est la surface de l'élément de contact orientée vers l'espace de réception.

6. Dispositif de soudage par ultrasons selon l'une des revendications précédentes,
dans lequel le premier élément de butée est déplaçable entre une position rentrée et une position sortie ;
dans lequel, dans la position rentrée, le premier élément de butée délimite l'espace de réception sur le cinquième côté et, dans la position sortie, laisse ouvert l'espace de réception sur le cinquième côté.

7. Dispositif de soudage par ultrasons (1) selon la revendication 6,
présentant en outre un dispositif d'entraînement (29) configuré pour déplacer activement le premier élément de butée entre la position rentrée et la position sortie.

8. Dispositif de soudage par ultrasons selon l'une des revendications précédentes,
présentant en outre un deuxième élément de butée (45), dans lequel l'espace de réception est en outre délimité, au moins dans une configuration de positionnement pouvant être adoptée par le deuxième élément de butée, sur un sixième côté, opposé au cinquième côté, par une surface (53) du deuxième élément de butée orientée vers l'espace de réception ;
dans lequel le deuxième élément de butée est réalisé électriquement conducteur sur sa surface orientée vers l'espace de réception afin de former une troisième électrode (55) ;
dans lequel le dispositif de soudage par ultrasons est configuré pour détecter un court-circuit entre la troisième électrode et la deuxième électrode et pour reconnaître, sur cette base, le positionnement souhaité d'au moins un des partenaires d'assemblage à souder.

9. Dispositif de soudage par ultrasons selon la revendication 8,
dans lequel le deuxième élément de butée est déplaçable entre une position rentrée et une position sortie,
dans lequel, dans la position rentrée, le deuxième élément de butée délimite au moins dans certaines zones l'espace de réception sur un sixième côté et, dans la position sortie, laisse ouvert l'espace de réception sur le sixième côté.

10. Dispositif de soudage par ultrasons selon l'une des revendications 8 et 9,
dans lequel le deuxième élément de butée présente plusieurs segments allongés (47) qui s'étendent chacun dans une direction le long du sixième côté et parallèlement les uns aux autres,
dans lequel chacun des segments est déplaçable indépendamment des segments adjacents entre la position rentrée et la position sortie.

11. Dispositif de soudage par ultrasons selon l'une des revendications précédentes,
dans lequel le dispositif de soudage par ultrasons est configuré pour émettre un signal perceptible par un opérateur du dispositif de soudage par ultrasons en cas de détection d'un court-circuit entre la première électrode et la deuxième électrode.

12. Dispositif de soudage par ultrasons selon l'une des revendications précédentes,
dans lequel le dispositif de soudage par ultrasons est configuré pour autoriser l'exécution d'une opération de soudage uniquement en cas de détection d'un court-circuit entre la première électrode et la deuxième électrode.

13. Dispositif de soudage par ultrasons selon l'une des revendications précédentes,
dans lequel le dispositif de soudage par ultrasons est configuré pour déclencher automatiquement l'exécution d'une opération de soudage en cas de détection d'un court-circuit entre la première électrode et la deuxième électrode.
